# EUROPEAN PATENT APPLICATION

(11) **EP 4 722 619 A1**
(43) Date of publication of application: **08.04.2026**
(21) Application number: 25205941.5
(22) Date of filing: 01.10.2025
(51) Int. Cl.: F26B 23/00

(54) **OPERATING METHOD AND PLANT WITH TUNNEL FOR THE HEAT TREATMENT OF OBJECTS**

(30) Priority: 03.10.2024 IT 202400021957
(71) Applicant: Geico S.p.A., 20092 Cinisello Balsamo (MI) (IT)
(72) Inventor: CASTAGNA, Massimo, I-20092 Cinisello Balsamo (MI) (IT); COLOMBAROLI, Paolo, IT-20092 Cinisello Balsamo (MI) (IT)
(74) Representative: Dragotti & Associati S.P.A.

(57) **Abstract**

A method is described for heating the air inside at least one tunnel for the heat treatment of objects (11) in a plant (10, 110, 210) for the heat treatment of objects (11). The heat treatment may be a heat treatment for drying paint. The objects may be motor vehicle bodies or bodywork parts. The heat treatment produces pollutants in the air which is present in the tunnel and the method comprises the steps of extracting the polluted air from the tunnel (13), purifying it in a purification system (21) which generates hot fumes at the outlet, passing the hot fumes through a heat exchanger (37) which is connected to a heat pump (30) which recovers heat and produces at the outlet a heated fluid that is used to heat the air in the tunnel (13). A plant (10, 110, 210) operating in accordance with the method is also described.

## Description

The present invention relates to an innovative method and to a plant with tunnel, operating in accordance with the method, for the heat treatment of objects, in particular but not exclusively, motor vehicle bodies or bodywork parts. The heat treatment may be, preferably but not exclusively, a heat treatment for drying paint applied to the objects.

In the sector relating to the continuous production of painted objects, for example motor vehicle bodies or bodywork parts, tunnel-like ovens for the heat treatment (and in particular the drying) of the paint applied beforehand onto the objects, which arrive in sequence at an inlet of the tunnel and exit from the opposite end, are known. Suitably heated air is usually recirculated inside the tunnel while the objects are transported from the inlet end to the outlet end of the tunnel. For example air recirculating heaters may be provided, these being distributed at intervals along the tunnel. The length of the tunnel will depend on the duration of the treatment and the desired transport speed.

In these plants with a tunnel it is usually required to keep at a low level the concentration of the polluting volatile substances which are generated inside the tunnel during the process. For this reason the air inside the tunnel must be regularly replaced. The polluted air is extracted from the tunnel, conveyed away for purification and then emitted - purified - into the environment, while the clean air is drawn off from the outside, heated to the process temperature and introduced into the tunnel. The need to renew the air, however, increases significantly the energy consumption of the plant. Often, therefore, heat exchangers are used, these recovering part of the heat from the air extracted from the tunnel in order to preheat the clean air before heating it further by means of electric or combustion systems until the desired operating temperature is reached, and then introduce it into the tunnel. These known plants, however, still have a high energy requirement.

The general object of the present invention is to provide tunnel heat treatment plants which have a better energy efficiency.

In view of the said object, the idea which has occurred is to provide, according to the invention, a method for heating the air in at least one tunnel for the heat treatment of objects in a plant for the heat treatment of objects, the tunnel comprising a transport system, which transports the objects along the tunnel, the heat treatment producing pollutants in the air present inside the tunnel, the method comprising the steps of extracting the polluted air from the tunnel, purifying it a purification system which generates hot fumes at the outlet, passing the hot fumes through a heat exchanger which is connected to a heat pump which recovers heat and produces at the outlet a heated fluid that is used to heat the air in the tunnel.

Still in view of said object, the idea which has occurred is to provide a plant for the heat treatment of objects, comprising at least one tunnel for heat treatment of the objects and equipped with a transport system which transports the objects along the tunnel, an outlet for extracting polluted air from the tunnel, which is connected to a purification system which generates hot fumes at the outlet, characterized in that the outlet for the hot fumes of the purification system is connected to a heat exchanger which is connected to the inlet of the heat pump with an outlet which supplies heated fluid to units for heating the air in the tunnel.

In order to illustrate more clearly the innovative principles of the present invention and its advantages compared to the prior art, examples of embodiment applying these principles will be described below with the aid of the accompanying drawings. In the drawings:
- Figure 1 shows a schematic view of a plant with drying tunnel according to the invention;
- Figures 2 and 3 show schematic views of two possible alternative embodiments of the plant according to the invention.

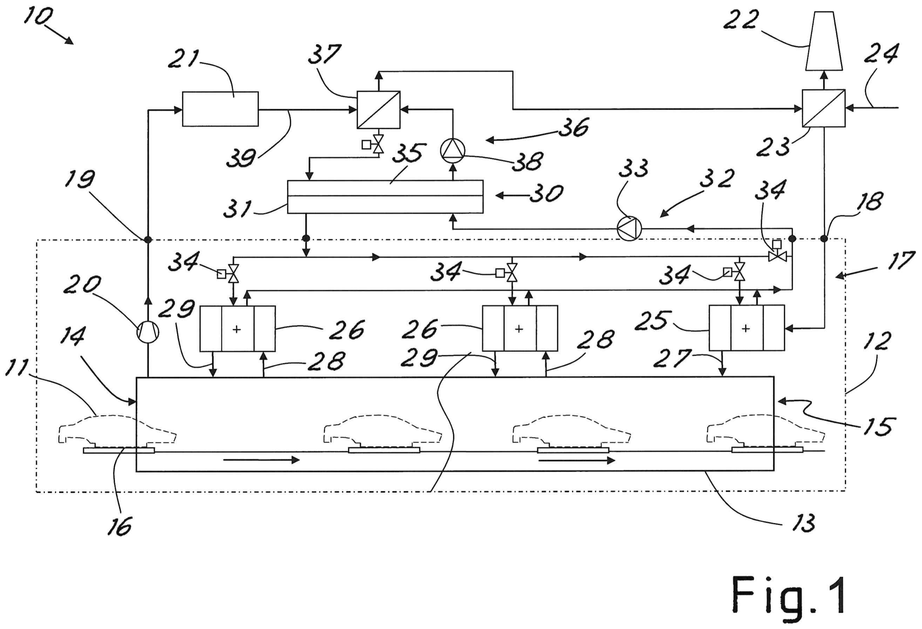

With reference to the Figures, Figure 1 shows a heat treatment plant - denoted overall by 10 - provided in accordance with the invention, for treating objects 11.

The plant 10 comprises an oven system 12 in turn comprising a heat treatment tunnel 13 with an inlet 14 at one end and an outlet 15 at the opposite end and a known transport system 16 (for example a sequential chain transport line or the like) which transports the objects 11 from the inlet 14 to the outlet 15 of the tunnel with the desired speed.

The objects 11 reach the tunnel after a surface treatment which requires a heat treatment process inside the tunnel. The surface treatment for example consists of painting, and the heat treatment preferably consists of heat treatment for drying the paint.

The objects may be for example motor vehicle bodies or bodywork parts.

The oven system 12 comprises systems 17 for heating the air in the tunnel so as to obtain the desired temperature inside the tunnel for the heat treatment process which is to be carried out. The temperature for drying the paint may be for example in the region of 120-130°C.

The heat treatment produces pollutants in the air present in the tunnel which must be removed or in any case kept below a predefined threshold value. Cyclically or continuously the polluted air is therefore extracted from the tunnel or replaced with clean air.

The oven system therefore has an evacuation outlet 19 for evacuating the polluted air from the tunnel. For example, the outlet 19 comprises a suitable extraction unit 20 (for example extraction fans).

The oven system 12 also advantageously has an inlet 18 for clean air which comes from the outside 24 and which usually undergoes heating before being introduced into the tunnel 13.

The polluted air extracted from the tunnel is conveyed from the evacuation outlet 19 to a known purification system 21 which generates purified hot air fumes at its outlet 39.

The hot fumes may in general be produced by combustion inside the purification system which eliminates the pollutants present in the polluted air, thermally treating the pollutants (in particular for example burning them).

The hot fumes produced by the purification system are usually conveyed to a chimney 22, for example so as to be emitted, purified, into the external environment.

The purification system 21 may be of any known type suitable for eliminating in an adequate manner the pollutants present in the polluted air extracted from the tunnel 13 and generated during the heat treatment process inside the tunnel. For example, in the case of pollutants consisting of organic solvents (VOC), the purification system may be of the known RTO (Regenerative Thermal Oxidizer) type.

The hot fumes exiting the purification tunnel 21 cross a heat exchanger 37 which is connected to a heat pump 30 which recovers heat and outputs a heated fluid which is used to heat the air in the tunnel.

Along the path of the fumes directed towards the chimney 22 there may also be provided a heat exchanger 23 (preferably downstream of the exchanger 37) with the inlet side arranged in series along the path of the fumes so as to be crossed also by the fumes, such that heat is exchanged between the hot fumes and the clean, colder, air which, from the external inlet 24, is conveyed to the clean air inlet 18 of the oven system 12 passing through the outlet side of the exchanger.

Here "inlet side" and "outlet side" of an exchanger are understood as being respectively the fluid circuit which yields heat inside the exchanger and the fluid circuit which receives the heat inside the exchanger.

By means of the exchanger 23, the fumes directed towards the chimney 22 may yield at least part of their residual heat to the clean air which, from the outside 24, is conveyed to the inlet 18 of the oven system, so as to obtain preheating of the clean air, for example from an inlet temperature of 30°C to a preheated temperature of about 70°C.

The systems 17 for heating the air inside the tunnel may advantageously comprise one or more heating units 25,26 which heat the air in the tunnel to the desired temperature. For example, one or more heating units 25 (for example the heating unit 25 shown on the right in Figure 1) may be connected to the inlet 18 so as to receive the clean air from the inlet 18, heat it to the process temperature and introduce it into the tunnel with an associated heated air outlet 27.

One or more heating units 26 (for example, distributed along the tunnel 13) may be connected with their intake inlets 28 inside the tunnel so as to draw off air from predetermined points of the tunnel, heat it and introduce back into the tunnel via associated heated air outlets 29. The circulation of the air may be forced by means of a suitable known circulating fan (not shown).

The use of heating units distributed along the tunnel allows the desired temperature (or desired temperature profile) to be maintained along the entire length of the tunnel. For heating of the air to be introduced into the tunnel 13, the heating units 25 and/or 26 receive the heated fluid from the heat pump 30.

In particular, in the embodiment shown, the heating units 25 and/or 26 are connected to the outlet branch (condenser) 31 of the heat pump 30 via an output circuit 32 for circulating the transfer fluid, so as to receive from the heat pump 30 at least part of the heat needed to heat the air to be introduced into the tunnel.

The output circuit 32 may for example use superheated water or diathermic oil as the fluid for transfer of heat from the outlet branch of the heat pump 30 to the units 25,26 for heating the air in the tunnel.

The circuit 32 may advantageously comprise a circulation pump 33 and control valves 34 so as to obtain the desired circulation and the desired transfer of heat into the various units 25,25.

By way of example, as shown in Figure 1, for heat transfer from the exchanger 37 to the heat pump 30, the inlet branch 35 (evaporator) of the heat pump 30 may be connected, via an input circuit 36 for circulating transfer fluid, to the outlet side of the heat exchanger 37, the inlet side of the which is crossed by the hot fumes directed towards the chimney 22.

The heat of the fumes may this be extracted in an efficient manner and used by the heat pump to heat the air in the tunnel.

The input circuit 36 may for example use superheated water or diathermic oil as the fluid for transfer of heat from the outlet side of the exchanger 37 to the inlet branch of the heat pump 30.

The input circuit 36 may advantageously comprise a suitable pump 37 for circulating the transfer fluid.

Preferably, the exchanger 37 may have its inlet side which is connected along the path of the fumes between the purification system 21 and the exchanger 23 (if present).

The heat pump, which is electrically powered, may be of various known types. For example it may be a multiple-cylinder heat pump, with centrifugal compressor, etc. The use of a heat pump which recovers in an efficient manner the residual heat of the fumes is able to ensure a substantial improvement in the energy consumption of the plant.

The fumes exiting the purifier 21 may for example have a temperature in the region of 160°C (for example 167°C) and exit the exchanger 37 at a temperature for example of about 115°C.

The exchanger 37 may thus supply the pump for example with a fluid at a temperature of about 150°C which returns to the exchanger 37 at a temperature of about 100°C (for example 105°C).

The heat pump may also be defined as being a high-temperature heat pump. The heat pump may have a temperature of the output fluid which is close to or higher than 200°C. The exchange fluid in the circuit 32 may return to the heat pump 30 at a temperature of about 160°C after heating the air for the tunnel in the units 25 and/or 26.

If necessary, the units 25, 26 (preferably outside the tunnel) may also comprise further air heating systems (for example electric systems, fluid systems or systems with a burner) should the heat pump not be sufficient on its own to heat the air to the temperature required by the process in the tunnel. In this case also there is in any case a substantial improvement in the energy consumption of the plant owing to the heat recovery obtained with the heat pump 30.

The heat pump system described above may be advantageously able to heat efficiently several tunnel systems (for example two tunnel systems in the same plant). This may be useful for providing several tunnels which in the plant carry out the same heat treatment on different objects, or to obtain different heat treatments (for example treatments in sequence) on the same objects. For example, a tunnel oven system may be present in the plant for the heat treatment following the deposition of undercoats and/or sealing, and a tunnel oven system may be present for drying following the application of topcoats or enamels, etc. Plants with several heat treatment tunnels for treatments carried out in parallel or in sequence may be easily imagined by the person skilled in the art on the basis of the description provided hitherto.

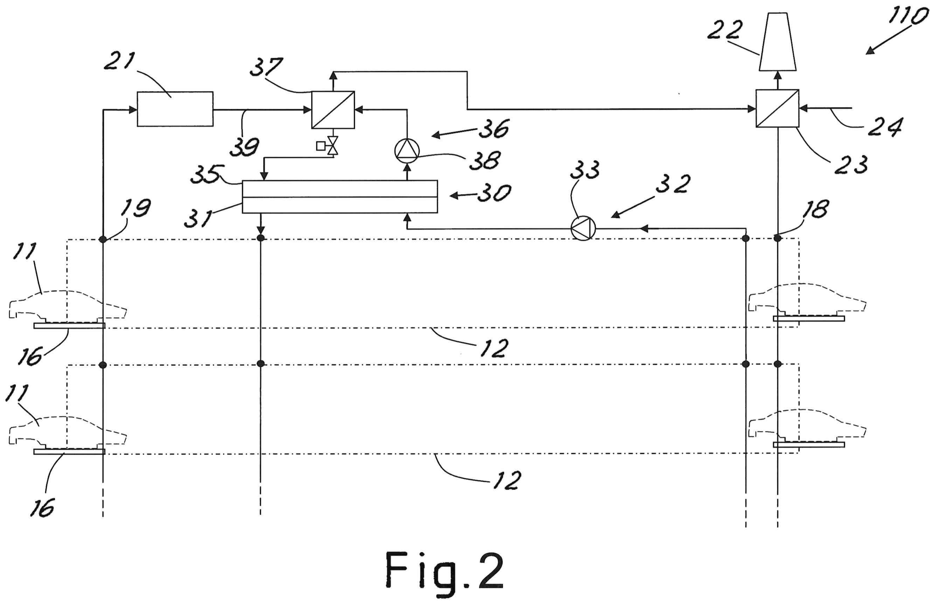

Figure 2 shows by way of example a plant - denoted overall by 110 - realized in accordance with the principles of the invention and with several oven systems 12 as described with reference to Figure 1 and the preceding embodiment of the plant 10. The oven systems 12 are substantially similar to the oven system already described for the preceding embodiment and therefore are not further shown or described here, whereby, if necessary, reference may be made to Figure 1 and to the corresponding description provided above.

For the sake of clarity, parts similar to those of the preceding embodiment will have the same numbering.

The tunnel oven systems 12 in the embodiment of the plant 110 have preferably the respective clean air inlets 18 and polluted air outlets 19 arranged in parallel.

The outlets 19 of the tunnel oven systems 12 convey the polluted air to the purification system 21 which produces the hot fumes at the outlet. The fumes cross the exchanger 37 which supplies the heat pump 30 in order to heat the air in the tunnel 13, as described above.

The clean air inlets 18 of the tunnel systems receive preferably the clean air from the preheating exchanger 23 which is crossed by the fumes directed from the purification system to the chimney 22. As may be now easily imagined by the person skilled in the art, all of the description provided above for the first embodiment is also applicable entirely or partly to the second embodiment shown in Figure 2.

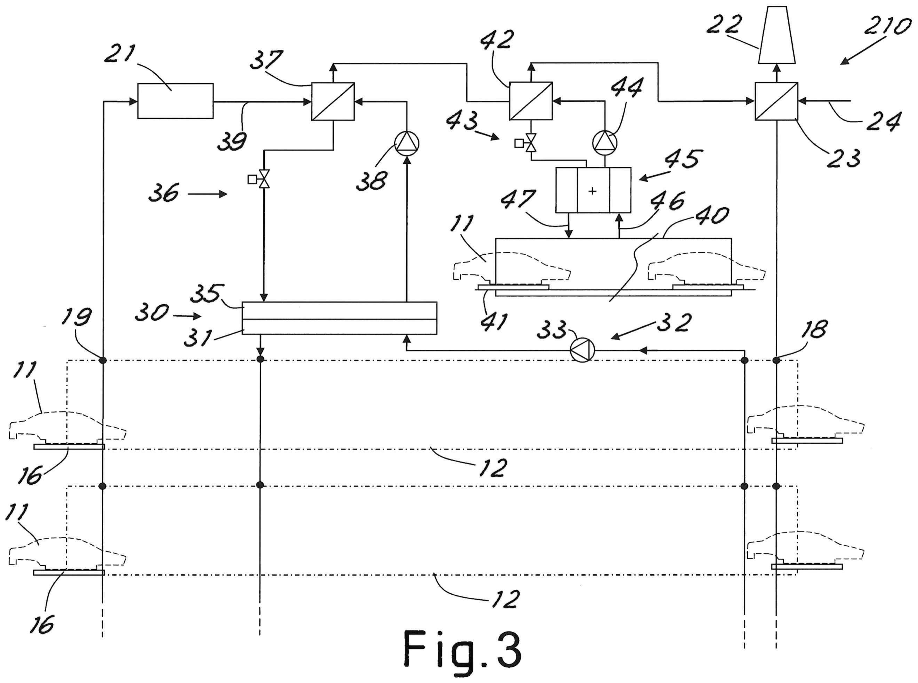

Figure 3 shows by way of example a further plant - denoted overall by 210 - which is realized in accordance with the principles of the invention and which may have one or more oven systems 12 as described with reference to the preceding embodiments.

For the sake of clarity, similar parts will have the same numbering as that used in the preceding embodiments.

Thus one or more oven systems 12 will be provided, as in the preceding embodiments, with clean air inlets 18 and polluted air outlets 19.

The polluted air outlet 19 is connected to the inlet of the purification system 21 which produces the hot fumes at its outlet. The fumes pass through the exchanger 37 connected to the heat pump 30. For example, as already described above, the exchanger 37 supplies hot fluid to the inlet 35 of the heat pump 30 via the fluid circulation circuit 36 with the pump 38. The outlet 31 of the heat pump 30 heats the air in the tunnel or tunnels 12, as already described above for the preceding embodiments.

The clean air inlet or inlets 18 preferably receive the clean air from a preheating exchanger 23 which receives the heat from the fumes which are directed from the purification system 21 to the chimney 22.

All of the description provided above for the first and second embodiments is also applicable entirely or partly to the third embodiment shown in Figure 3.

The third embodiment 210 also comprises a further tunnel oven 40 for heating the products 11 to and/or keeping them at a predetermined temperature or within a predetermined temperature range pending subsequent processing operations or any intermediate treatment.

For example, the tunnel oven 40 may be used to keep the products at a predetermined temperature lower than that of the oven 12 (for example 80-100°C) for a period known as a "flash-off" period, during which some of the solvents in the paint evaporate from the products. This flash-off period may be applied, for example, before entry into the oven 12.

A known transport system 41 (for example a sequential chain transport line or the like) may be provided in order to transport the objects 11 from the inlet to the outlet of the tunnel 40 at a desired speed.

For heating of the air in the tunnel oven 40 a further exchanger 42 may be used, being advantageously located along the path of the fumes directed towards the chimney 22 and preferably arranged downstream of the exchanger 37 which supplies the heat pump 30 and upstream of the exchanger 23 for preheating the clean air (if present).

The exchanger 42 may heat a transfer fluid (for example water or diathermic oil) which via a circulation circuit 43 (preferably with a circulation pump 44) supplies one or more heating units 45 which heat the air in the tunnel 40 to the desired temperature. These heating units 45 may be similar to the heating units 25,26 of the tunnels 12. For example, they may comprise inlets 46 for the air to be heated and outlets 47 for the heated air to be introduced into the tunnel 40. The tunnel 40 may need hot air at a relatively low temperature and therefore may have a low energy requirement, such that the heat recovered with the exchanger 42 is sufficient, together with, if necessary, the heat produced by any electric or combustion heating system contained in the unit or units 45.

At this point it is clear how the predefined objects have been achieved, providing tunnel heat treatment plants with an improved energy efficiency, owing to the use of heat pumps suitably inserted in the tunnel heating circuits.

The purification system produces fumes with heat which is extracted in an efficient manner by the heat pump. The concentration of solvents in the polluted air extracted from the tunnels may also be such as to allow combustion in the purification system 21 (realized for example as an incinerator) without having to supply the latter with gas and therefore further reducing the energy consumption levels.

Obviously, the above description of an embodiment applying the innovative principles of the present invention is provided by way of example of these innovative principles and must therefore not be regarded as limiting the scope of the rights claimed herein. For example, other processing operations which require heat treatment or drying of objects in a tunnel, resulting in the generation of polluting volatile substances to be extracted and eliminated by means of thermal purification systems, may advantageously make use of the system described, even though the plant according to the invention has been found to be particularly advantageous in the case where motor vehicle bodies or bodywork parts or structures are painted.

The extraction of the polluted air has been illustrated and described here as taking place via a single outlet 19. In order to maintain a suitably low concentration of pollutants along the tunnel, the outlet 19 may also be supplied by several outlets distributed along the tunnel, for example also activated depending on a pollutant concentration level detected by suitable sensors distributed along the tunnel. Similarly, the clean air inlet 18 may introduce clean air, suitably heated at various points along the tunnel, also depending on the extraction of polluted air from various points in the tunnel.

## Claims

1. Method for heating air in at least one tunnel for the heat treatment of objects (11) in a plant (10, 110, 210) for the heat treatment of objects (11), the tunnel (13) comprising a transport system (16) which transports the objects along the tunnel, the heat treatment producing pollutants in the air present in the tunnel, the method comprising the steps of extracting the polluted air from the tunnel (13), purifying it in a purification system (21) which generates hot fumes at the outlet, passing the hot fumes through a heat exchanger (37) which is connected to a heat pump (30) which recovers heat and produces at the outlet a heated fluid that is used to heat the air in the tunnel (13).

2. Method according to claim 1, **characterized in that** the hot fumes are also passed through a second heat exchanger (23) for preheating clean air which must be introduced into the tunnel.

3. Method according to any one of the preceding claims, **characterized in that** the tunnel (13) is connected to heating units (26) which are distributed along the tunnel and draw off air from the tunnel, heat it and reintroduce it into the tunnel, the heated fluid exiting the heat pump (30) being sent to said heating units.

4. Method according to any one of the preceding claims, **characterized in that** the heat treatment in the tunnel (13) is a heat treatment for drying paint applied to the objects (11).

5. Method according to any one of the preceding claims, **characterized in that** the plant comprises several tunnels (13), the air in which is heated by means of the heat pump (30).

6. Method according to any one of the preceding claims, **characterized in that** along the path of the hot fumes a further heat exchanger (42) is arranged in order to heat the air inside a further tunnel oven (40) of the plant.

7. Plant (10, 110, 210) for the heat treatment of objects (11), comprising at least one tunnel (13) for heat treatment of the objects and equipped with a transport system (16) which transports the objects along the tunnel, an outlet (19) for extracting polluted air from the tunnel, which is connected to a purification system (21) which generates hot fumes at one of its outlets (39), **characterized in that** the outlet (39) for the hot fumes of the purification system (21) is connected to a heat exchanger (37) which is connected to the inlet (35) of a heat pump (30) with an outlet (31) which supplies heated fluid to units (25, 26) for heating the air in the tunnel (13).

8. Plant according to claim 7, **characterized in that** downstream of the first exchanger (37) there is a second exchanger (23) to be crossed by the hot fumes and connected so as to preheat clean air directed towards a clean air inlet (18) of the tunnel (13).

9. Plant according to either one of claims 7 or 8, **characterized in that** the heating units (26) are distributed along the tunnel, with inlets (28) for drawing off air from the tunnel and outlets (29) for introducing into the tunnel air heated by the fluid exiting the heat pump (30).

10. Plant according to any one of claims 7 to 9, **characterized in that** the heat treatment in the tunnel (13) is a heat treatment for drying paint applied to the objects (11).

11. Plant according to any of claims 7 to 10, **characterized in that** it comprises several tunnels (13), the air heating units (25, 26) of which are connected to the outlet (31) of the heat pump (30).

12. Plant according to any one of claims 7 to 11, **characterized in that** it comprises a further tunnel oven (40) and a further heat exchanger (42) connected so as to be crossed by the hot fumes exiting the purification system (21) and to heat the air inside said further tunnel oven (40).

13. Plant according to any one of claims 7 to 12, **characterized in that** it comprises a chimney (22) for the final emission of the hot fumes.
